(19) Europäisches Patentamt
European Patent Office
Office européen des brevets

(11) EP 4 749 277 A1

(12) EUROPEAN PATENT APPLICATION
published in accordance with Art. 153(4) EPC

(43) Date of publication:
27.05.2026 Bulletin 2026/22

(21) Application number: 24843154.6

(22) Date of filing: 17.07.2024

(51) International Patent Classification (IPC):
G01N 27/414 (2006.01) G01N 27/416 (2006.01)

(52) Cooperative Patent Classification (CPC):
G01N 27/414; G01N 27/416

(86) International application number:
PCT/JP2024/025641

(87) International publication number:
WO 2025/018365 (23.01.2025 Gazette 2025/04)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 20.07.2023 JP 2023118592

(71) Applicants:
- Mitsui Kinzoku Company, Limited
Tokyo 141-8584 (JP)
- Kyushu Institute of Technology
Kitakyushu-shi
Fukuoka 804-8550 (JP)

(72) Inventors:
- TOKUCHI Shigeki
Ageo-shi, Saitama 362-0021 (JP)
- SUMIYOSHI Atsuro
Ageo-shi, Saitama 362-0021 (JP)
- SAKAI Keiju
Ageo-shi, Saitama 362-0021 (JP)
- HARUYAMA Tetsuya
Kitakyushu-shi, Fukuoka 808-0196 (JP)
- TAKATSUJI Yoshiyuki
Kitakyushu-shi, Fukuoka 808-0196 (JP)

(74) Representative: Novagraaf Technologies
2 rue Sarah Bernhardt
CS90017
92665 Asnières-sur-Seine Cedex (FR)

# (54) DEVICE, AND CONCENTRATION MEASURING APPARATUS INCLUDING SAME AND CONCENTRATION MEASURING METHOD USING SAME

(57) A device that can be used in a concentration measurement apparatus and a concentration measurement method is provided, the device being capable of detecting a threshold voltage $V_{th}$ with high sensitivity and promptly measuring a concentration of a target to be detected in a sample liquid even if the sample liquid contains a minute amount of the target to be detected.

The device includes an insulating substrate, at least one insulating composite layer, and a liquid storage portion capable of holding the sample liquid, the insulating composite layer includes a pair of electrodes, and a semiconductor layer in contact with the pair of electrodes, the liquid storage portion includes a reference electrode in contact with the sample liquid, the semiconductor layer includes an oxide including an indium (In) element, a zinc (Zn) element, and an additive element (X), the additive element (X) is at least one element selected from tantalum (Ta), strontium (Sr), and niobium (Nb), and a selective detection membrane having selectivity with respect to the target to be detected in the sample liquid is provided between the insulating composite layer and the liquid storage portion.

EP 4 749 277 A1

[Fig. 1]

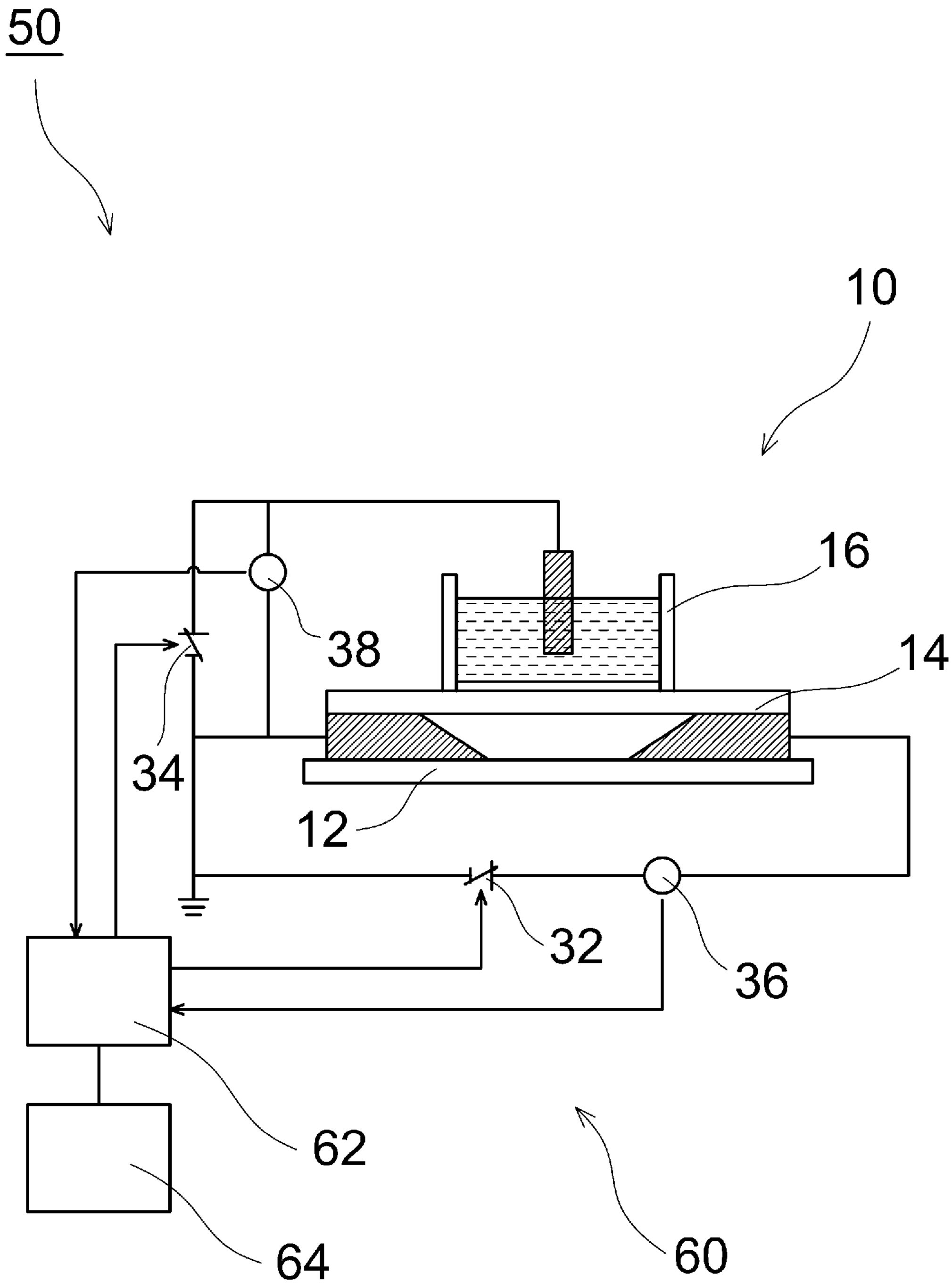

## Description

### Technical Field

The present invention relates to a device in which a threshold voltage $V_{th}$ that is a voltage value of a reference electrode at which whether or not a current flows switches between a pair of electrodes changes according to a concentration of a target to be detected in a sample liquid, and more particularly, to a concentration measurement apparatus and a concentration measurement method for measuring the concentration of the target to be detected in the sample liquid based on such a change of the threshold voltage $V_{th}$.

### Background Art

Society 5.0 that is a coming super-smart society aims at both economic development and solutions to social problems, and IoT that supports this requires sensors for data acquisition.

In related art, an electrochemical sensor using a semiconductor is known as a method for detecting whether or not there is a target to be detected in a sample liquid and a concentration thereof.

For example, Patent Literatures 1 and 2 disclose a sensor having a field-effect transistor (FET) structure.

As illustrated in Figure 8, in such a sensor 100 having an FET structure, a gate electrode 102 is formed on a substrate 101, and an insulating film 103 is formed so as to cover the gate electrode 102. Further, a semiconductor layer 104 is formed on the insulating film 103, and a drain electrode 105 and a source electrode 106 are formed to come into contact with the semiconductor layer 104.

Further, as illustrated in Figure 8, a selective detection membrane 107 may be independently provided so as to cover the gate electrode 102 or the insulating film 103 may be used as the selective detection membrane. The selective detection membrane 107 can selectively detect a target to be detected in a sample liquid. Further, a threshold voltage $V_{th}$ of a gate voltage changes depending on an amount of the target to be detected adsorbed to the selective detection membrane 107, and thus, a concentration of the target to be detected in the sample liquid can be measured by measuring the threshold voltage $V_{th}$ of the gate voltage in a state where the sample liquid is brought into contact with the selective detection membrane 107.

A sensor using a semiconductor in this manner has high sensitivity and is small, and thus, can detect a minute amount and can be used as a portable detection device. Further, by using a semiconductor, a detection result is output as an electric signal, and thus, the sensor has high compatibility with communication equipment and can be used for remote measurement.

### Citation List

#### Patent Literature

Patent Literature 1: JP2011-043420A
Patent Literature 2: JP2012-122749A

### Summary of Invention

#### Technical Problem

In Patent Literatures 1, 2, an oxide semiconductor in which, for example, gallium (Ga), aluminum (Al), or iron (Fe) are contained in an oxide including indium (In) and zinc (Zn), particularly, an oxide semiconductor containing In, Ga, and Zn (hereinafter, referred to as "InGaZnO") is used as the semiconductor layer 104. Further, in the related art, crystal Si (silicon) is often used as the semiconductor layer 104.

However, in a case where crystal Si is used, the semiconductor layer is not transparent with respect to visible light and cannot be folded, and thus, there is a problem that applications are limited. Further, an OFF current (leak current flowing from the drain electrode to the source electrode in a case where the gate voltage is set to be equal to or less than the threshold voltage $V_{th}$) is relatively large at approximately $1.0 \times 10^{-12}$ A/μm to $1.0 \times 10^{-7}$ A/um, and thus affects the sensor upon measurement as noise and leads to a disadvantage that it is difficult to detect a minute amount.

On the other hand, InGaZnO is transparent with respect to visible light and has flexibility, and thus, applications are not limited. Further, an OFF current is approximately $1.0 \times 10^{-16}$ A/μm to $1.0 \times 10^{-11}$ A/μm which is smaller than that of the crystal Si and thus has less influence as noise upon measurement.

However, electron mobility of InGaZnO is low at approximately 10 $cm^2/Vs$, and thus, it is difficult to detect a change of the threshold voltage $V_{th}$ with high accuracy unless a drain-source voltage $V_{DS}$ is made sufficiently large.

In view of such current circumstances, the present invention is directed to providing a device to be used for a concentration measurement apparatus and a concentration measurement method capable of detecting the threshold voltage $V_{th}$ with high sensitivity even if a sample liquid contains a minute amount of a target to be detected, and capable of promptly measuring a concentration of the target to be detected in the sample liquid.

Solution to Problem

The present invention has been made to solve the problem in the related art as described above, and a device, a concentration measurement apparatus including the device and a concentration measurement method using the device of the present invention include those having configurations as described below.

[1] A device including an insulating substrate, at least one insulating composite layer, and a liquid storage portion capable of holding a sample liquid, in which

the insulating composite layer includes a pair of electrodes and a semiconductor layer in contact with the pair of electrodes,
the liquid storage portion includes a reference electrode in contact with the sample liquid,
the semiconductor layer includes an oxide including an indium (In) element, a zinc (Zn) element, and an additive element (X),
the additive element (X) includes at least one element selected from tantalum (Ta), strontium (Sr), and niobium (Nb), and
a selective detection membrane having selectivity with respect to a target to be detected in the sample liquid is provided between the insulating composite layer and the liquid storage portion.

[2] The device according to [1], in which the selective detection membrane is an ionophore.
[3] The device according to [1], in which the selective detection membrane is a nucleic-acid probe.
[4] The device according to [1] to [3], in which field-effect mobility of the semiconductor layer is equal to or greater than 20 $cm^2/Vs$.
[5] The device according to [1] to [4], in which an OFF current between the pair of electrodes of the semiconductor layer is equal to or less than $1 \times 10^{-12}$ A.
[6] A concentration measurement apparatus including:

the device according to any of [1] to [5], and
a control device, in which
the control device includes
voltage application means for varying a voltage to be applied between an electrode on a side into which a current flows between the pair of electrodes, and the reference electrode,
current measurement means for measuring a current flowing between the pair of electrodes,
threshold voltage detection means for detecting a threshold voltage $V_{th}$ that is a voltage value of the reference electrode at which whether or not a current flows switches between the pair of electrodes based on a voltage value applied by the voltage application means and a current value measured by the current measurement means, and
concentration calculation means for calculating a concentration of the target to be detected in the sample liquid based on the threshold voltage $V_{th}$ detected by the threshold voltage detection means.

[7] A concentration measurement method for detecting a concentration of a target to be detected in a sample liquid using the device according to any of [1] to [5], the concentration measurement method including,
detecting a threshold voltage $V_{th}$ that is a voltage value of the reference electrode at which whether or not a current flows switches between the pair of electrodes and measuring a concentration of the target to be detected in the sample liquid based on the threshold voltage $V_{th}$.

Advantageous Effects of Invention

With the present invention, by employing as a semiconductor layer, an oxide including an indium (In) element, a zinc (Zn) element, and an additive element (X), the additive element (X) being at least one element selected from tantalum (Ta), strontium (Sr), and niobium (Nb), an OFF current can be made smaller, and electron mobility can be made greater than that in a case where the oxide semiconductor in the related art is used, so that it is possible to provide a device capable of detecting the threshold voltage $V_{th}$ with high sensitivity even if the sample liquid contains a minute amount of the target to be detected.

Further, by using such a device, it is possible to provide a concentration measurement apparatus and a concentration measurement method capable of promptly measuring a concentration of the target to be detected in the sample liquid even if the sample liquid contains a minute amount of the target to be detected.

Brief Description of Drawings

[Figure 1] Figure 1 is a schematic view for describing a configuration of a concentration measurement apparatus in the present embodiment.

[Figure 2] Figure 2 is a schematic view for describing a configuration of a device to be used in the concentration measurement apparatus in Figure 1.

[Figure 3] Figure 3 is a graph indicating a relationship between a concentration of a target to be detected (LiCl) and a threshold voltage $V_{th}$ when the concentration of the target to be detected in a sample liquid L (aqueous LiCl solution) is measured using the concentration measurement apparatus in Figure 1.

[Figure 4] Figure 4 is a graph indicating a relationship between the concentration of the target to be detected (LiCl) and the threshold voltage $V_{th}$ when the concentration of the target to be detected in the sample liquid L (aqueous LiCl solution) is measured using the concentration measurement apparatus in Figure 1.

[Figure 5] Figure 5 is a graph indicating a relationship between the concentration of the target to be detected and the threshold voltage $V_{th}$ when the concentration of the target to be detected in the sample liquid L is measured in a case where crystal Si is used as a semiconductor layer of the concentration measurement apparatus.

[Figure 6] Figure 6 is a graph indicating a relationship between a concentration of a target to be detected ($NH_4Cl$) and the threshold voltage $V_{th}$ when the concentration of the target to be detected in another sample liquid L (aqueous $NH_4Cl$ solution) is measured using the concentration measurement apparatus in Figure 1.

[Figure 7] Figure 7 is a graph indicating a relationship between the concentration of the target to be detected ($NH_4Cl$) and the threshold voltage $V_{th}$ when the concentration of the target to be detected in the other sample liquid L (aqueous $NH_4Cl$ solution) is measured using the concentration measurement apparatus in Figure 1.

[Figure 8] Figure 8 is a schematic view for describing a configuration of a sensor having an FET structure in related art.

Description of Embodiment

An embodiment (examples) of the present invention will be described in more detail below based on the drawings.

Figure 1 is a schematic view for describing a configuration of a concentration measurement apparatus in the present embodiment, and Figure 2 is a schematic view for describing a configuration of a device to be used in the concentration measurement apparatus in Figure 1.

As illustrated in Figure 1, a concentration measurement apparatus 50 of the present embodiment includes a device 10 including an insulating substrate 12, at least one insulating composite layer 14, and a liquid storage portion 16 capable of holding a sample liquid, and a control device 60.

Note that the device 10 configured as illustrated in Figure 2 can be, for example, a semiconductor element such as a field-effect transistor (FET) and a metal-oxide semiconductor field-effect transistor (MOSFET).

The insulating substrate 12 is, for example, a substrate formed with a material such as glass and ceramics having insulating property.

The insulating composite layer 14 includes a pair of electrodes (a first electrode 141 and a second electrode 142), and a semiconductor layer 144 in contact with the pair of electrodes 141, 142.

The liquid storage portion 16 is not particularly limited if the liquid storage portion has a configuration capable of holding a sample liquid L, and in the present embodiment, is configured with a partition portion 16a provided to surround a selective detection membrane 18 which will be described later to hold the sample liquid L such that the sample liquid L comes into contact with the selective detection membrane 18. Note that in the liquid storage portion 16, a reference electrode 161 is provided so as to come into contact with the sample liquid L.

Further, the selective detection membrane 18 is provided between the insulating composite layer 14 and the liquid storage portion 16.

The selective detection membrane 18 has selectivity with respect to a target to be detected in the sample liquid L. Specifically, the selective detection membrane 18 has property of allowing an ion of the target to be detected to selectively pass through or property of selectively capturing a component (for example, a nucleic acid) of the target to be detected. As such a selective detection membrane 18, for example, an ionophore such as a lithium ionophore, a potassium ionophore, a sodium ionophore, a calcium ionophore, an ammonium ionophore, an ionophore for chloride ion and a magnesium ionophore can be used, or a nucleic-acid probe can be used.

A method for manufacturing such a selective detection membrane 18 is not particularly limited, but, for example, in a case where an ionophore is used, the selective detection membrane 18 can be created according the processes as described below.

First, polyvinyl chloride is weighed on a scale while being put in a beaker. Here, as polyvinyl chloride, polyvinyl chloride with a polymerization degree of approximately 1050 is preferably used in terms of easy handling and smooth pasting to the insulating composite layer 14.

Then, tetrahydrofuran is added in the beaker as a solvent, and content of the beaker is stirred with a stirrer until polyvinyl chloride dissolves.

After polyvinyl chloride dissolves, a plasticizer, an ionophore, and an anion scavenger are added, and the content is further stirred with the stirrer.

Note that, as the plasticizer, for example, 2-nitrophenyl octyl ether (NPOE) or bis(2-ethylhexyl) sebacate can be used.

Further, as the anion scavenger, for example, potassium tetrakis(4-chlorophenyl)borate can be used.

The ionophore can be selected as appropriate according to an ion of the target to be detected, and, for example, dibenzyl-14-crown-4 or TTD-14-crown-4 can be used in a case where it is desired to detect a lithium ion ($Li^+$), bis(benzo-15-crown-5) can be used in a case where it is desired to detect a potassium ion ($K^+$), bis(12-crown-4) can be used in a case where it is desired to detect a sodium ion ($Na^+$), HDOPP-Ca can be used in a case where it is desired to detect a calcium ion ($Ca^{2+}$), nonactin can be used in a case where it is desired to detect an ammonium ion ($NH_4^+$), Bisthiourea-1 can be used in a case where it is desired to detect a chloride ion ($Cl^-$), and C14-K22B5, K22B1B5, or K22B9 can be used in a case where it is desired to detect a magnesium ion ($Mg^{2+}$).

Then, by spreading and drying in air a solution prepared in this manner, the selective detection membrane 18 can be created. Note that while it is effective to make the selective detection membrane 18 thinner to make a response speed higher (expedite establishment of ion diffusional equilibration), in this case, the selective detection membrane 18 is preferably manufactured through spin coating.

The selective detection membrane 18 created in this manner is cut out to be an appropriate size and pasted on the insulating composite layer 14 while preventing air from being sandwiched, and the liquid storage portion 16 is bonded on the pasted selective detection membrane 18, for example, with an epoxy resin, thereby the device 10 can be created.

Note that the insulating composite layer 14 includes an insulating film 146 at least at a portion in contact with the selective detection membrane 18. The insulating film 146 has a role as a protective layer for protecting the semiconductor layer 144 from the sample liquid L. By the insulating film 146 being provided, it is possible to prevent the semiconductor layer 144 from being eroded and improve durability and reliability of the semiconductor layer 144. As a material of the insulating film 146, a publicly known material can be applied if the material has insulating property, and a material having corrosion resistance is preferable. Examples of the material having insulating property can include $Ta_2O_5$, $Si_3N_4$, and $SiO_2$, for example, and a thickness thereof is preferably equal to or greater than 0.01 $\mu$m and equal to or less than 0.5 $\mu$m, and more preferably, equal to or greater than 0.03 $\mu$m and equal to or less than 0.2 $\mu$m.

Further, field-effect mobility of the semiconductor layer 144 is preferably equal to or greater than 20 $cm^2/Vs$ and, particularly, more preferably equal to or greater than 60 $cm^2/Vs$.

Further, in the semiconductor layer 144 in the device 10 having the configuration as described above, a current flowing from the first electrode 141 to the second electrode 142 or an OFF current flowing from the second electrode 142 to the first electrode 141 is preferably equal to or less than $1 \times 10^{-12}$ A and, particularly, more preferably equal to or less than $1 \times 10^{-14}$ A when a voltage to be applied to the reference electrode 161 is set to be equal to or less than the threshold voltage $V_{th}$. As a result of the OFF current being small in this manner, when the threshold voltage $V_{th}$ is detected as will be described later, the threshold voltage $V_{th}$ can be detected with higher accuracy even if a voltage to be applied between the first electrode 141 and the second electrode 142 is small.

Such a semiconductor layer 144 includes an oxide including an indium (In) element, a zinc (Zn) element, and an additive element (X), and the additive element (X) is at least one element selected from tantalum (Ta), strontium (Sr), and niobium (Nb).

Specifically, In and X preferably satisfy an atomic ratio expressed by the following expression (1) (where X in the expression is a sum of content ratios of the additive element, which similarly applies to expressions (2) and (3) below).

$$0.4 \leq (In + X)/(In + Zn + X) \leq 0.8 \quad ... \quad (1)$$

Zn preferably satisfies an atomic ratio expressed by the following expression (2).

$$0.2 \leq Zn/(In + Zn + Z) \leq 0.6 \quad ... \quad (2)$$

X preferably satisfies an atomic ratio expressed by the following expression (3).

$$0.001 \leq X/(In + Zn + X) \leq 0.015 \ldots (3)$$

As a result of the atomic ratios of In, Zn, and X satisfying expressions (1) to (3), the field-effect mobility and the OFF current of the semiconductor layer 144 become those as described above.

To make the field-effect mobility of the semiconductor layer 144 higher and make the OFF current lower, the atomic ratios of In, Zn, and X preferably satisfy expression (1-2), expression (2-2), and expression (3-2).

$$0.43 \leq (In + X)/(In + Zn + X) \leq 0.79 \ldots (1-2)$$

$$0.21 \leq Zn/(In + Zn + X) \leq 0.57 \ldots (2-2)$$

$$0.0015 \leq X/(In + Zn + X) \leq 0.013 \ldots (3-2)$$

Further, the atomic ratios of In, Zn, and X more preferably satisfy expression (1-3), expression (2-3), and expression (3-3).

$$0.48 \leq (In + X)/(In + Zn + X) \leq 0.78 \ldots (1-3)$$

$$0.22 \leq Zn/(In + Zn + Z) \leq 0.52 \ldots (2-3)$$

$$0.002 < X/(In + Zn + X) \leq 0.012 \ldots (3-3)$$

Further, the atomic ratios of In, Zn, and Z more preferably satisfy expression (1-4), expression (2-4), and expression (3-4).

$$0.53 \leq (In + X)/(In + Zn + X) \leq 0.75 \ldots (1-4)$$

$$0.25 \leq Zn/(In + Zn + X) \leq 0.47 \ldots (2-4)$$

$$0.0025 \leq X/(In + Zn + X) \leq 0.010 \ldots (3-4)$$

Further, the atomic ratios of In, Zn, and X more preferably satisfy expression (1-5), expression (2-5), and expression (3-5).

$$0.58 \leq (In + X)/(In + Zn + X) \leq 0.70 \ldots (1-5)$$

$$0.30 \leq Zn/(In + Zn + X) \leq 0.42 \ldots (2-5)$$

$$0.003 \leq X/(In + Zn + X) \leq 0.009 \ldots (3-5)$$

As the additive element (X), one or more types selected from Ta, Sr, and Nb are used as described above. These elements can be independently used or can be used while two or more types are combined. Note that while the additive element (X) may include elements other than Ta, Sr, and Nb, the additive element (X) preferably includes only these elements.

Further, as the semiconductor layer 144 is thinner, a change in electric conductivity of a surface layer becomes larger, and thus, a change in moving electric charges becomes larger as will be described later, and measurement accuracy is improved. The thickness of such a semiconductor layer 144 is preferably equal to or less than 0.5 $\mu$m, more preferably equal to or less than 0.1 $\mu$m, and particularly preferably equal to or less than 0.05 $\mu$m. Note that while a lower limit value of the thickness of the semiconductor layer 144 is not particularly specified, the lower limit value is typically equal to or greater than 0.005 $\mu$m.

Further, a surface 144a of the semiconductor layer 144 on the selective detection membrane 18 side is preferably as smooth as possible. In a case where the surface 144a of the semiconductor layer 144 is not smooth, for example, a gap occurs with the insulating film 146, or the insulating film 146 is discontinuously formed, which decreases adhesiveness between the insulating film 146 and the selective detection membrane 18 and makes it impossible to accurately grasp a potential change from the selective detection membrane 18. For this reason, the measurement accuracy decreases or the operation becomes unstable.

Specifically, a maximum height Sz of the surface 144a of the semiconductor layer 144 is preferably equal to or less than 0.05 μm, more preferably equal to or less than 0.01 μm, and most preferably equal to or less than 0.003 μm. While a lower limit value of the maximum height Sz is not particularly specified, the lower limit value is typically equal to or greater than 0.0005 μm. Further, an arithmetic mean height Sa of the surface 144a of the semiconductor layer 144 on the selective detection membrane 18 side is preferably equal to or less than 0.03 μm, more preferably equal to or less than 0.005 μm, and most preferably equal to or less than 0.002 μm. While a lower limit value of the arithmetic mean height Sa is not particularly specified, the lower limit value is typically equal to or greater than 0.0002 μm.

Here, the maximum height Sz and the arithmetic mean height Sa are parameters of a surface roughness specified in ISO25178, and such parameters can be measured with, for example, a 3D surface roughness shape measuring device (NexView manufactured by Zygo), or similar devices. Note that, measurement conditions in this case are preferably performed according to the following.

Measurement is performed under conditions of a 50x objective lens, a 20x zoom lens, and a measurement range of 89 μm × 87 μm in accordance with ISO25178. A roughness curve in a range of 3 μm × 3 μm is extracted from an obtained three-dimensional surface shape, the roughness curve is corrected under the following correction conditions by an analysis program "Mx" attached to the 3D surface roughness shape measuring device, and the maximum height Sz and the arithmetic mean height Sa are calculated.

<Correction Conditions>

- Remove: Form Remove
- Filter Type: Spline
- Filter: Low Pass
- Type: Gaussian Spline Auto

Note that in a case where the device 10 as described above is formed as an FET structure, the device 10 can be formed using a method similar to the method for forming an FET and a MOSFET which is known in the related art, and for example, can be formed by forming a conductive metal thin film on the insulating substrate 12 as the first electrode 141 and the second electrode 142 using a sputtering device, and then, forming an oxide thin film having a configuration as described as the semiconductor layer 144 using the sputtering device. Note that a shadow mask can be used for film formation of the first electrode 141 and the second electrode 142 and patterning in film formation of the semiconductor layer 144.

Note that while a conductive metal to be used as the first electrode 141 and the second electrode 142 is not particularly limited, for example, molybdenum (Mo) or tungsten (W) can be used, and further, an alloy of these metals and cerium oxide ($CeO_2$), copper (Cu) or silver (Ag), for example, can be also used.

Then, the insulating film 146 is formed thereon by depositing a ceramic thin film. Specifically, the insulating film 146 can be formed by depositing a SiOx thin film under conditions of a film forming gas: a mixed gas of $SiH_4/N_2O/N_2$, a film formation pressure: 110 Pa, and a substrate temperature: 250°C to 400°C, for example, using a plasma CVD apparatus such as PD-2202L manufactured by Samco Inc.

Further, the control device 60 of the concentration measurement apparatus 50 of the present embodiment includes a variable voltage source 32 for applying a voltage between the first electrode 141 and the second electrode 142, a variable voltage source 34 (voltage application means) for applying a voltage between the first electrode 141 and the reference electrode 161, an ammeter 36 (current measurement means) for measuring a current value between the first electrode 141 and the second electrode 142, and a voltmeter 38 (voltage measurement means) for measuring a voltage value between the first electrode 141 and the reference electrode 161.

The control device 60 includes a computer including calculation means, storage means, input/output means, for example, and is configured to be able to perform application voltage control of the variable voltage source 32 and the variable voltage source 34, current value measurement by the ammeter 36 and voltage value measurement by the voltmeter 38 based on a program stored in the storage means.

Further, the control device 60 further includes threshold voltage detection means 62. The threshold voltage detection means 62 is configured to control voltages to be applied by the variable voltage source 32 and the variable voltage source 34 and receive the current value and the voltage value measured by the ammeter 36 and the voltmeter 38 as electric signals. Such threshold voltage detection means 62 can be implemented by a computer, for example, incorporated into the control device 60.

The threshold voltage detection means 62 gradually increases a voltage $V_g$ to be applied between the first electrode 141 and the reference electrode 161 by the variable voltage source 34 in a state where a predetermined voltage $V_{ds}$ is applied between the first electrode 141 and the second electrode 142 by the variable voltage source 32. Further, the threshold voltage detection means 62 measures the threshold voltage $V_{th}$ by detecting a change of a current $I_d$ flowing between the first electrode 141 and the second electrode 142 by the ammeter 36 and detecting a change of the voltage $V_g$ between the first electrode 141 and the reference electrode 161 by the voltmeter 38.

It is known that in the device 10 having the configuration as described above, the threshold voltage $V_{th}$ changes depending on an amount of the target to be detected existing on the surface of the selective detection membrane 18 or inside the selective detection membrane 18. Thus, by measuring the threshold voltage $V_{th}$, it is possible to detect a concentration of the target to be detected included in the sample liquid L.

Note that a method for measuring the threshold voltage $V_{th}$ is not particularly limited, and, for example, it is also possible to detect the voltage $V_g$ when the current $I_d$ starts flowing between the first electrode 141 and the second electrode 142, or it is possible to gradually decrease the voltage $V_g$ from a state where the current $I_d$ is flowing and detect the voltage $V_g$ when the current $I_d$ stops flowing. Further, while the method known in the related art such as a method in which the voltage $V_g$ is changed, and a value of $V_{ds}$ when the current $I_d$ reaches a predetermine value (for example, $1 \times 10^{-9}$ A) is set as the threshold voltage $V_{th}$, can be used, in order to perform more accurate measurement, it is preferable to apply the voltage $V_g$ in a predetermined range while keeping the voltage $V_{ds}$ constant, measure the current $I_d$ flowing at that time, calculate an approximated curve of $\sqrt{I_d}$ with respect to $V_g$ in the predetermined range through a least squares method, and set $V_g$ when $\sqrt{I_d}$ of the approximated curve = 0 as the threshold voltage $V_{th}$.

Figure 3 is a graph indicating a relationship between the concentration of the target to be detected and the threshold voltage $V_{th}$ when the concentration of the target to be detected in the sample liquid L is measured using the concentration measurement apparatus 50 of the present embodiment.

In this measurement (Example 1), an aqueous lithium chloride (LiCl) solution is used as the sample liquid L, lithium chloride (LiCl) is used as the target to be detected, a lithium ionophore is used as the selective detection membrane 18, the voltage $V_{ds}$ is set at 5 V, the predetermined range in which the voltage $V_g$ is changed is set at -3 V to 3 V, and a linear approximation of $\sqrt{I_d}$ is set in a range from 2 V to 3 V.

It can be seen as illustrated in Figure 3 that as the concentration of LiCl becomes higher, the threshold voltage $V_{th}$ becomes lower.

Thus, for example, by creating a calibration curve indicating the relationship between the concentration of the target to be detected and the threshold voltage $V_{th}$ in advance, the concentration of LiCl that is the target to be detected can be obtained based on the threshold voltage $V_{th}$ measured using the concentration measurement apparatus 50.

Alternatively, by performing machine learning using the concentration of the target to be detected and the threshold voltage $V_{th}$ which are associated with each other as teacher data, it is also possible to obtain the concentration of the target to be detected based on the threshold voltage $V_{th}$ measured using the concentration measurement apparatus 50 by utilizing artificial intelligence (AI).

The control device 60 of the present embodiment further includes concentration calculation means 64, and the concentration calculation means 64 is configured to calculate the concentration of the target to be detected as described above based on the threshold voltage $V_{th}$ detected by the threshold voltage detection means 62. Such concentration calculation means 64 can be implemented with a computer, for example, incorporated into the control device 60.

Figure 4 is a graph indicating a relationship between the concentration of the target to be detected and the threshold voltage $V_{th}$ when the concentration of the target to be detected in the sample liquid L is measured using the concentration measurement apparatus 50 of the present embodiment.

In this measurement, an aqueous lithium chloride (LiCl) solution is used as the sample liquid L, lithium chloride (LiCl) is used as the target to be detected, a lithium ionophore is used as the selective detection membrane 18, the voltage $V_{ds}$ is set at 1 V or 5 V, and a linear approximation of $\sqrt{I_d}$ is set in a range from 2 V to 3 V or from 1.5 V to 2.5 V. Combinations of specific conditions are indicated in Table 1.

[Table 1]

| | Voltage $V_{ds}$ | Linear approximation range of $\sqrt{I_d}$ |
|---|---|---|
| Example 2 | 1 V | 2 V - 3 V |
| Example 3 | 5 V | 2 V - 3 V |
| Example 4 | 1 V | 1.5 V - 2.5 V |
| Example 5 | 5 V | 1.5 V - 2.5 V |

As illustrated in Figure 4, even if the voltage $V_g$ is changed, or even if the predetermined range to be used for calculating the threshold voltage $V_{th}$ is changed, the concentration of LiCl correlates with the threshold voltage $V_{th}$.

As a comparative example (Comparative Example 1), Figure 5(A) indicates a graph indicating a relationship between the concentration of LiCl and the threshold voltage $V_{th}$ measured by the concentration measurement apparatus in which the selective detection membrane 18 and the liquid storage portion 16 are provided on an ISFET electrode (for PH measurement: Code No. 001314) manufactured by BAS Inc., the concentration measurement apparatus having a configuration similar to that of the concentration measurement apparatus 50 described above.

In this measurement, an aqueous lithium chloride (LiCl) solution is used as the sample liquid L, lithium chloride (LiCl) is used as the target to be detected, a lithium ionophore is used as the selective detection membrane 18, the voltage $V_{ds}$ is set at 5 V, the predetermined range in which the voltage $V_g$ is changed is set from -3 V to 3 V, and a linear approximation of $\sqrt{I_d}$ is set in a range from 1.5 V to 2.5 V.

As indicated in Figure 5(A), in a case where crystal Si is used as the semiconductor layer 144, the concentration of LiCl does not correlate with the threshold voltage $V_{th}$, and it is difficult to measure the concentration of LiCl from the threshold voltage $V_{th}$.

As another comparative example (Comparative Example 2), Figure 5(B) indicates a graph indicating a relationship between the concentration of LiCl and the threshold voltage $V_{th}$ measured by the concentration measurement apparatus used in Comparative Example 1 in a case where the voltage $V_{ds}$ is set at 1 V.

As indicated in Figure 5(B), even if the voltage $V_{ds}$ is changed, in a similar manner to the result indicated in Figure 5, the concentration of LiCl does not correlate with the threshold voltage $V_{th}$, and it is difficult to measure the concentration of LiCl from the threshold voltage $V_{th}$.

Figures 6 and 7 are graphs indicating a relationship between the concentration of the target to be detected and the threshold voltage $V_{th}$ when the concentration of the target to be detected in another sample liquid L is measured using the concentration measurement apparatus 50 of the present embodiment.

In this measurement (Examples 6, 7), an aqueous ammonium chloride ($NH_4Cl$) solution is used as the sample liquid L, ammonium chloride ($NH_4Cl$) is used as the target to be detected, an ammonium ionophore is used as the selective detection membrane 18, the voltage $V_{ds}$ is set at 5 V, a range in which the voltage $V_g$ is changed is set at -3 V to 3 V, and a linear approximation of $\sqrt{I_d}$ is set in a range from 2 V to 3 V (Figure 6) or from 1.3 V to 1.5 V (Figure 7).

It can be seen as indicated in Figures 6, 7 that as the concentration of $NH_4Cl$ becomes higher, the threshold voltage $V_{th}$ becomes lower.

In other words, a relationship between the concentration of $NH_4Cl$ and the threshold voltage $V_{th}$ has tendency similar to that of the relationship between the concentration of LiCl and the threshold voltage $V_{th}$ indicated in Examples 1 to 5. Thus, the concentration of $NH_4Cl$ that is the target to be detected can be obtained based on the threshold voltage $V_{th}$ measured using the concentration measurement apparatus 50 of the present embodiment.

Although a preferred embodiment of the present invention has been described above, the present invention is not limited thereto, and various modifications can be made without departing from the object of the present invention.

Reference Signs List

| | |
|---|---|
| 10 | Device |
| 12 | Insulating substrate |
| 14 | Insulating composite layer |
| 141 | First electrode |
| 142 | Second electrode |
| 144 | Semiconductor layer |
| 144a | Surface |
| 146 | Insulating film |
| 16 | Liquid storage portion |
| 16a | Partition portion |
| 161 | Reference electrode |
| 18 | Selective detection membrane |
| 32 | Variable voltage source |
| 34 | Variable voltage source |
| 36 | Ammeter |
| 38 | Voltmeter |
| 50 | Concentration measurement apparatus |
| 60 | Control device |

| | |
|---|---|
| 62 | Threshold voltage detection means |
| 64 | Concentration calculation means |
| 100 | Sensor |
| 101 | Substrate |
| 102 | Gate electrode |
| 103 | Insulating film |
| 104 | Semiconductor layer |
| 105 | Drain electrode |
| 106 | Source electrode |
| 107 | Ion selective detection membrane |

**Claims**

**1.** A device comprising an insulating substrate, at least one insulating composite layer, and a liquid storage portion capable of holding a sample liquid, wherein

the insulating composite layer includes a pair of electrodes and a semiconductor layer in contact with the pair of electrodes,
the liquid storage portion includes a reference electrode in contact with the sample liquid,
the semiconductor layer includes an oxide including an indium (In) element, a zinc (Zn) element, and an additive element (X),
the additive element (X) includes at least one element selected from tantalum (Ta), strontium (Sr), and niobium (Nb), and
a selective detection membrane having selectivity with respect to a target to be detected in the sample liquid is provided between the insulating composite layer and the liquid storage portion.

**2.** The device according to claim 1, wherein the selective detection membrane is an ionophore.

**3.** The device according to claim 1, wherein the selective detection membrane is a nucleic-acid probe.

**4.** The device according to claim 1, wherein field-effect mobility of the semiconductor layer is equal to or greater than 20 $cm^2/Vs$.

**5.** The device according to claim 1, wherein an OFF current between the pair of electrodes of the semiconductor layer is equal to or less than $1 \times 10^{-12}$ A.

**6.** A concentration measurement apparatus comprising:

the device according to any of claims 1 to 5; and
a control device, wherein
the control device comprises:

voltage application means for varying a voltage to be applied between an electrode on a side into which a current flows between the pair of electrodes, and the reference electrode;
current measurement means for measuring a current flowing between the pair of electrodes;
threshold voltage detection means for detecting a threshold voltage $V_{th}$ that is a voltage value of the reference electrode at which whether or not a current flows switches between the pair of electrodes based on a voltage value applied by the voltage application means and a current value measured by the current measurement means; and
concentration calculation means for calculating a concentration of the target to be detected in the sample liquid based on the threshold voltage $V_{th}$ detected by the threshold voltage detection means.

**7.** A concentration measurement method for detecting a concentration of a target to be detected in a sample liquid using the device according to any of claims 1 to 5, the concentration measurement method comprising:
detecting a threshold voltage $V_{th}$ that is a voltage value of the reference electrode at which whether or not a current flows switches between the pair of electrodes, and measuring the concentration of the target to be detected in the sample liquid based on the threshold voltage $V_{th}$.

[Fig. 1]

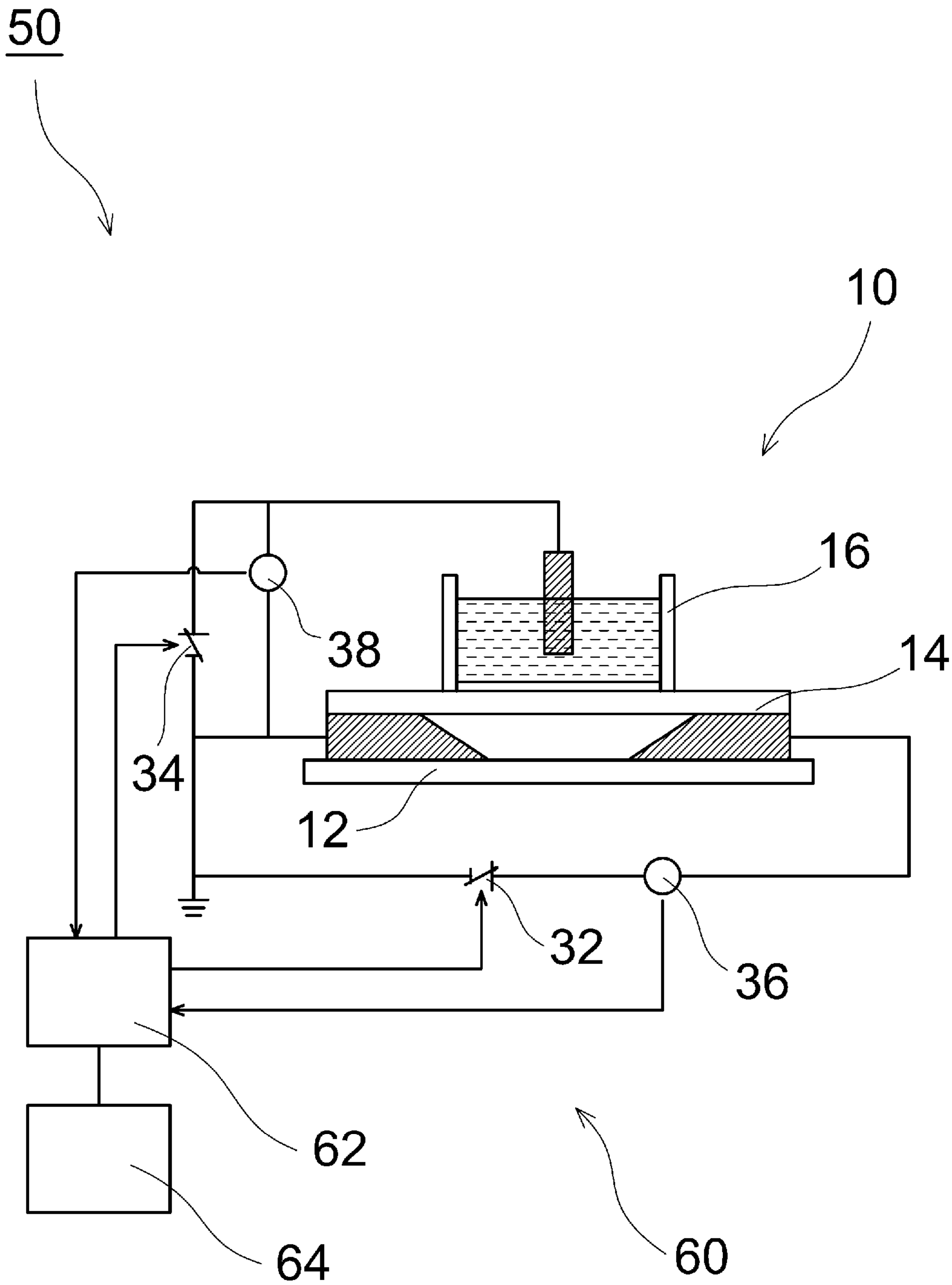

[Fig. 2]

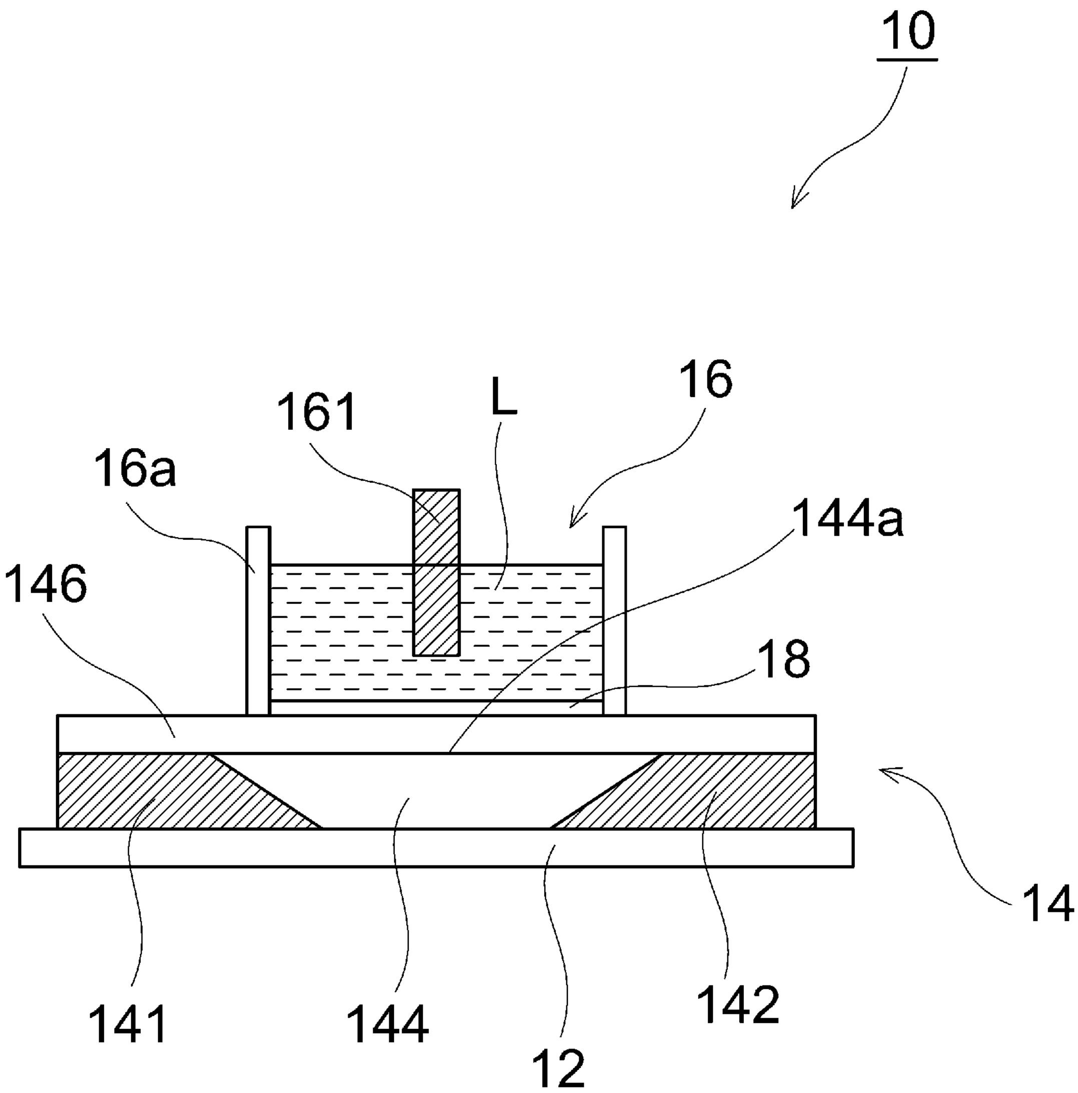

[Fig. 3]

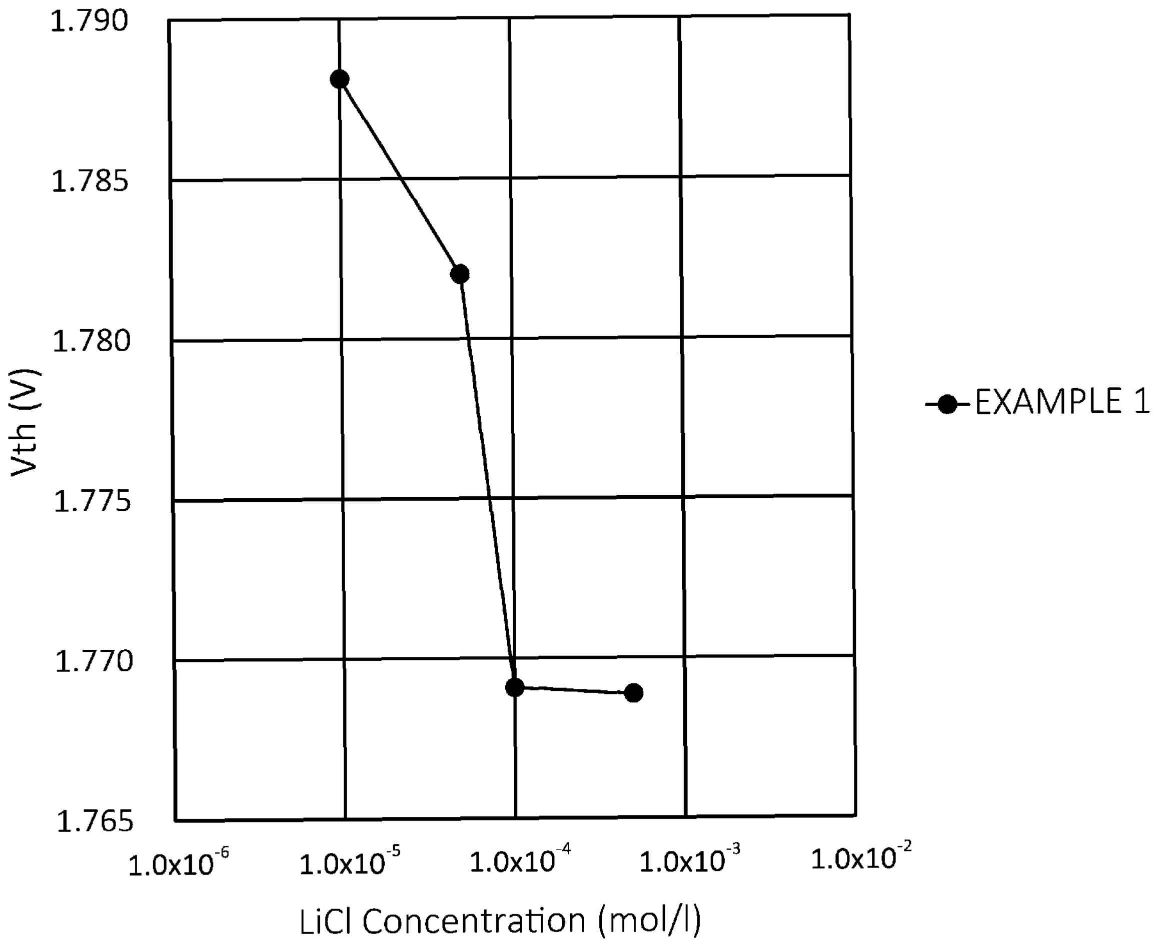
1.790
1.785
1.780
1.775
1.770
1.765
Vth (V)
1.0x10-6
1.0x10-5
1.0x10-4
1.0x10-3
1.0x10-2
LiCl Concentration (mol/l)
EXAMPLE 1

[Fig. 4]

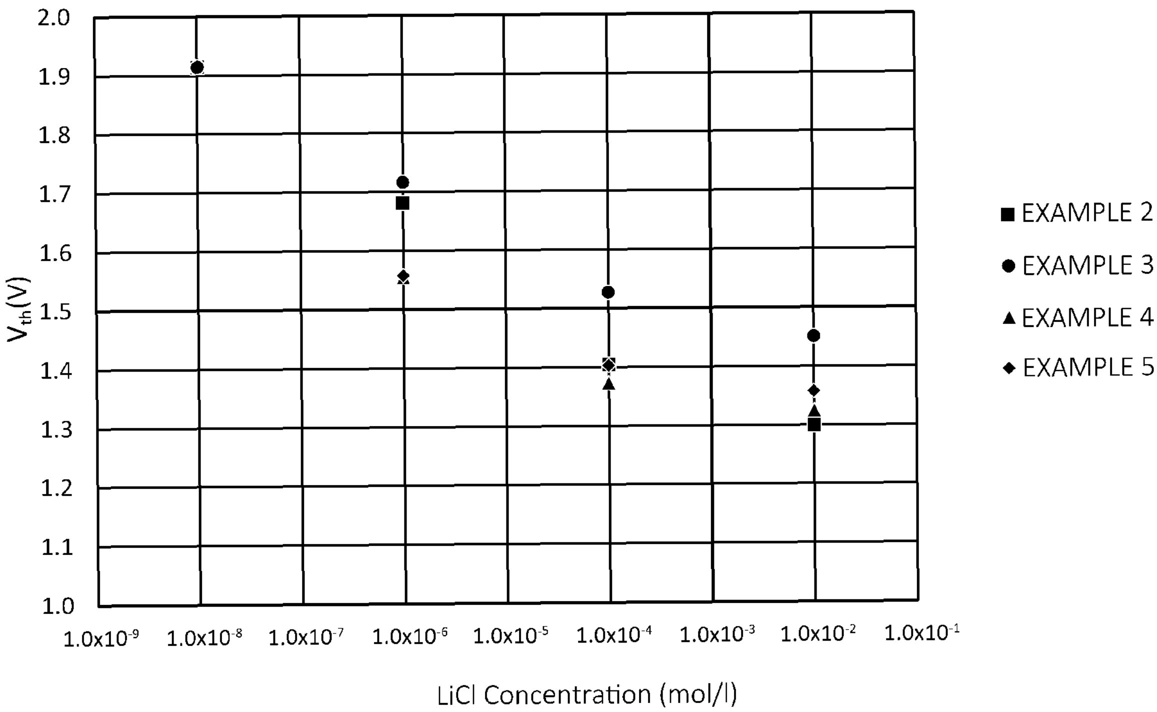
2.0
1.9
1.8
1.7
1.6
1.5
1.4
1.3
1.2
1.1
1.0
$V_{th}$(V)
1.0x10-9
1.0x10-8
1.0x10-7
1.0x10-6
1.0x10-5
1.0x10-4
1.0x10-3
1.0x10-2
1.0x10-1
LiCl Concentration (mol/l)
EXAMPLE 2
EXAMPLE 3
EXAMPLE 4
EXAMPLE 5

[Fig. 5]

(A)

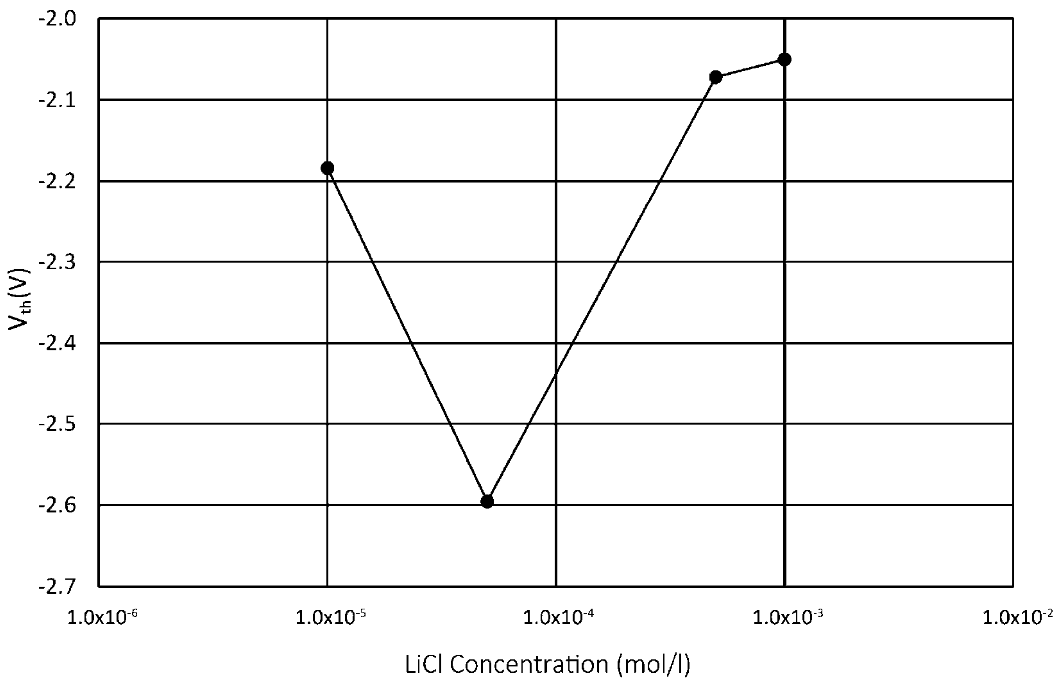
-2.0
-2.1
-2.2
-2.3
-2.4
-2.5
-2.6
-2.7
$V_{th}$(V)
1.0x10-6
1.0x10-5
1.0x10-4
1.0x10-3
1.0x10-2
LiCl Concentration (mol/l)

(B)

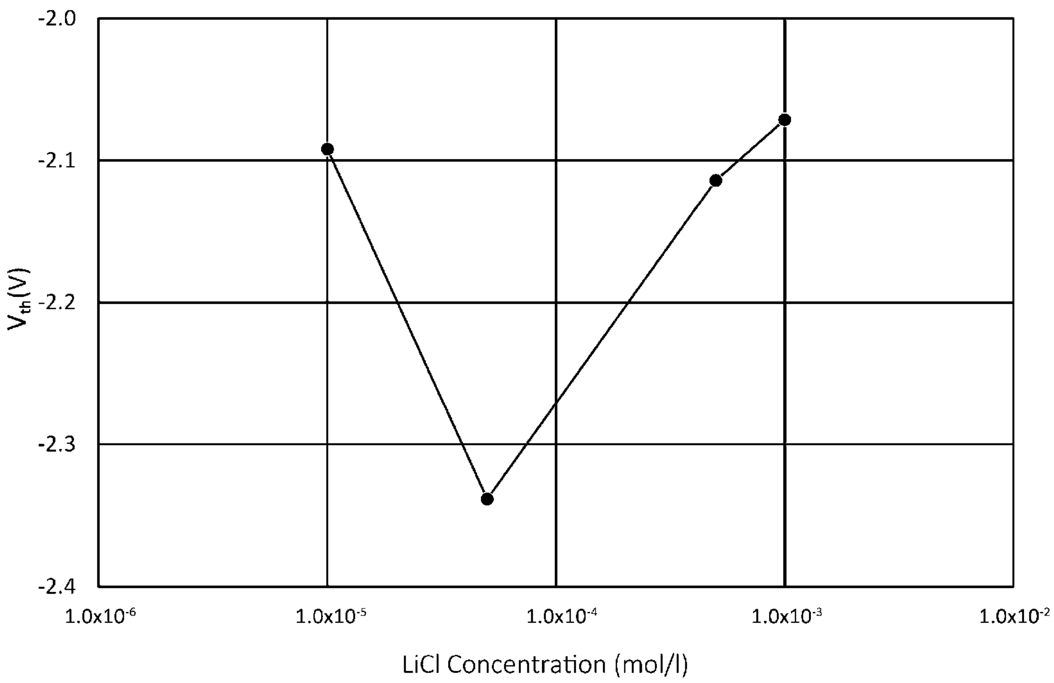
-2.0
-2.1
-2.2
-2.3
-2.4
$V_{th}$(V)
1.0x10-6
1.0x10-5
1.0x10-4
1.0x10-3
1.0x10-2
LiCl Concentration (mol/l)

[Fig. 6]

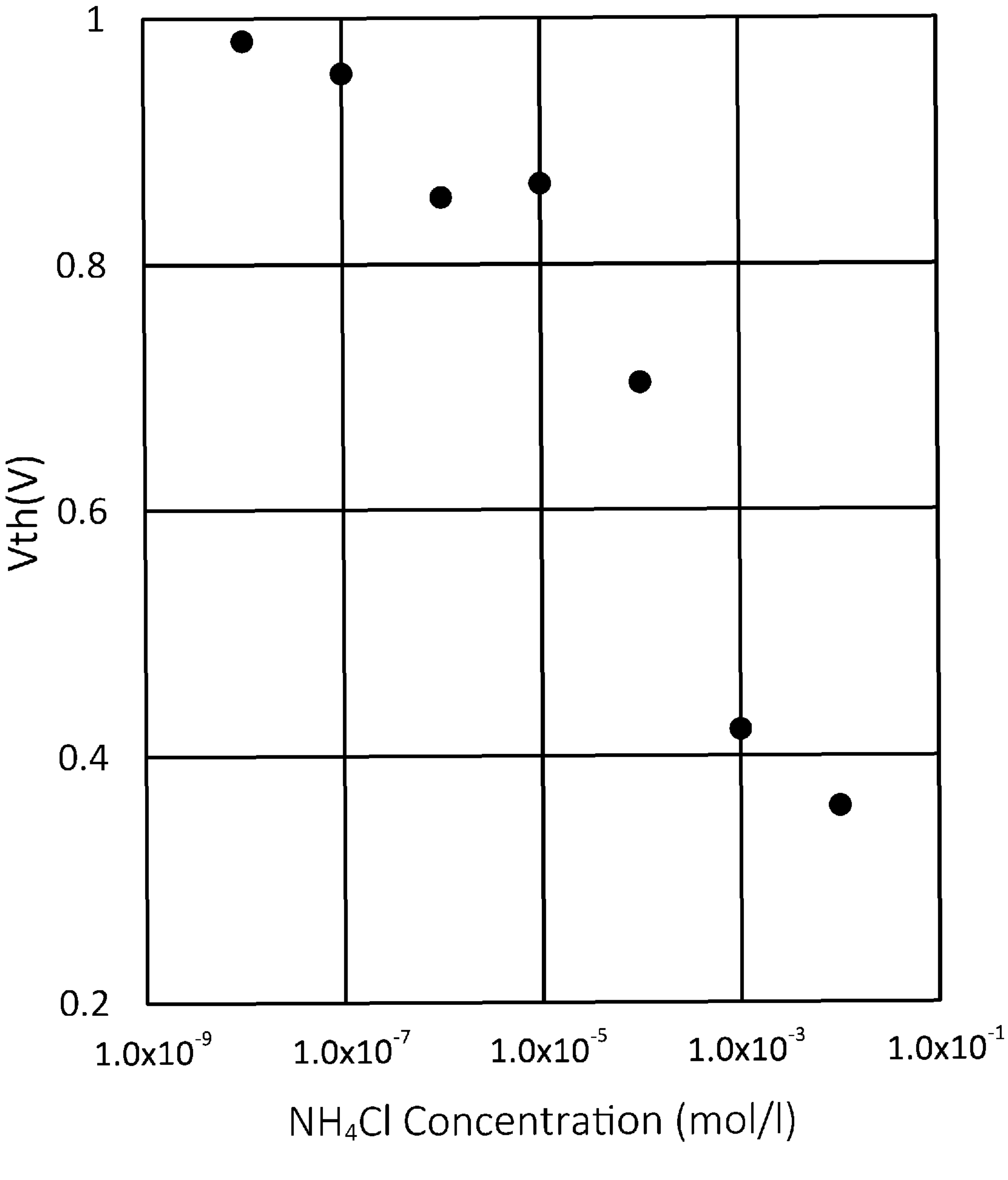
1
0.8
0.6
0.4
0.2
Vth(V)
1.0x10-9
1.0x10-7
1.0x10-5
1.0x10-3
1.0x10-1
NH4Cl Concentration (mol/l)

[Fig. 7]

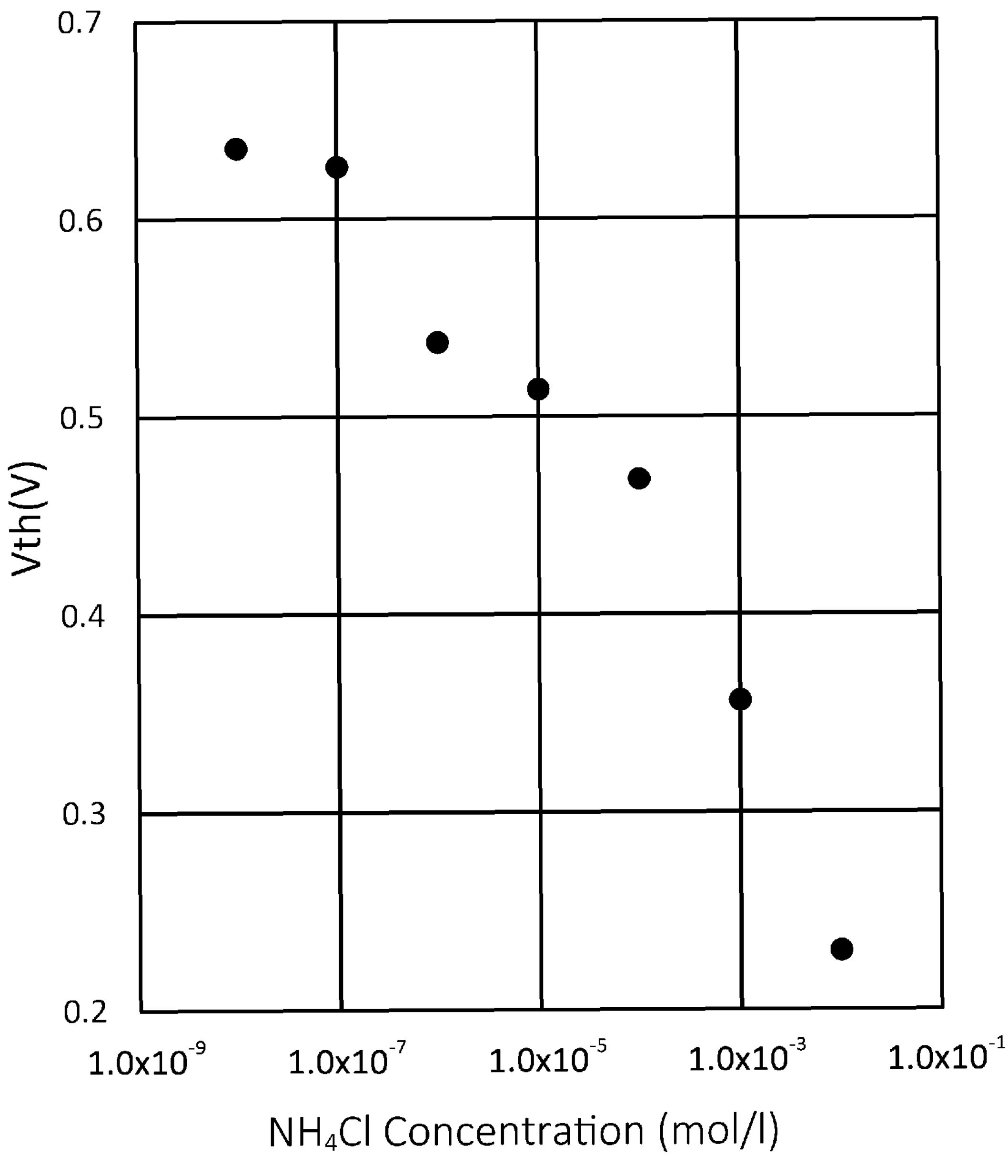
0.7
0.6
0.5
0.4
0.3
0.2
Vth(V)
1.0x10-9
1.0x10-7
1.0x10-5
1.0x10-3
1.0x10-1
NH4Cl Concentration (mol/l)

[Fig. 8]

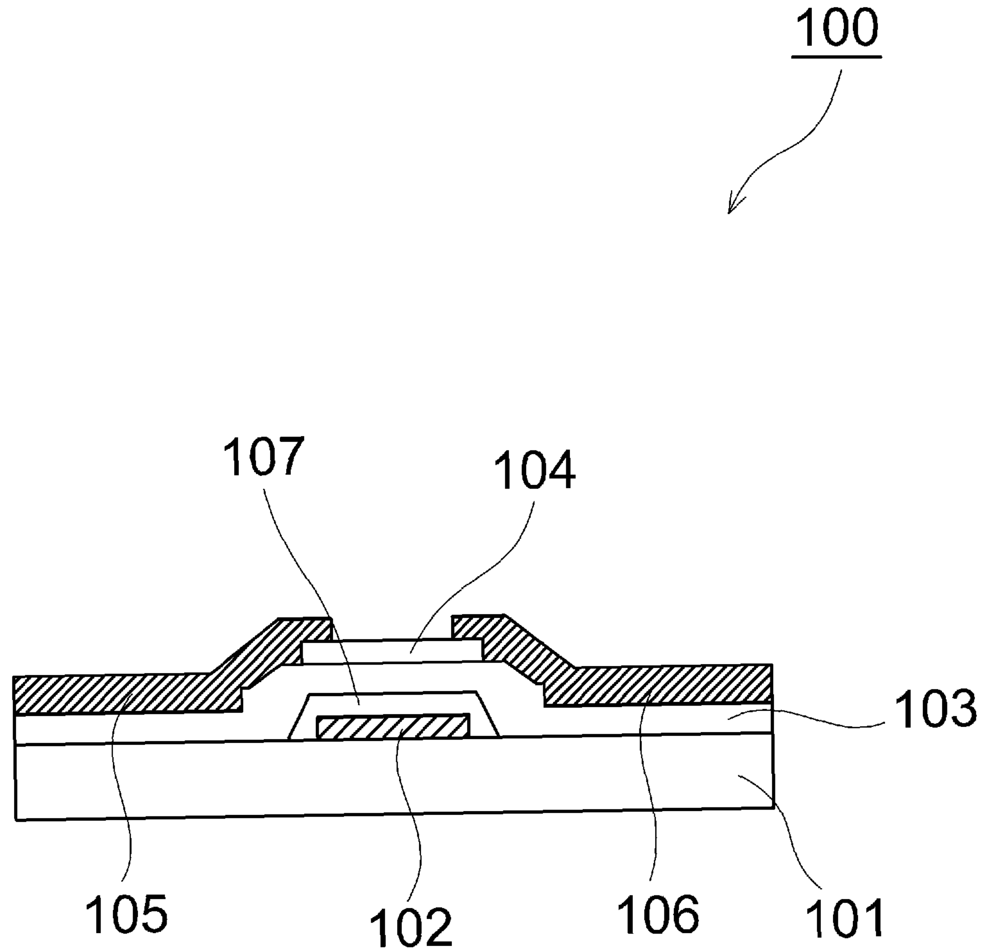

## INTERNATIONAL SEARCH REPORT

International application No.
**PCT/JP2024/025641**

**A. CLASSIFICATION OF SUBJECT MATTER**

***G01N 27/414***(2006.01)i; ***G01N 27/416***(2006.01)i
FI: G01N27/414 301V; G01N27/416 386G; G01N27/414 301G; G01N27/414 301K

According to International Patent Classification (IPC) or to both national classification and IPC

**B. FIELDS SEARCHED**

Minimum documentation searched (classification system followed by classification symbols)

G01N27/26-27/49, H01L29/78

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| Y<br><br>A | JP 2012-047763 A (DAI NIPPON PRINTING CO., LTD.) 08 March 2012 (2012-03-08) paragraphs [0028]-[0048], fig. 1-2 | 1-5<br><br>6-7 |
| Y | WO 2022/030455 A1 (MITSUI MINING & SMELTING CO., LTD.) 10 February 2022 (2022-02-10) paragraphs [0002]-[0008] | 1-5 |
| A | JP 2013-092479 A (DAI NIPPON PRINTING CO., LTD.) 16 May 2013 (2013-05-16) entire text, all drawings | 1-7 |
| A | JP 6-273376 A (MITSUBISHI CABLE INDUSTRIES, LTD.) 30 September 1994 (1994-09-30) entire text, all drawings | 1-7 |
| A | JP 2007-108160 A (HITACHI, LTD.) 26 April 2007 (2007-04-26) entire text, all drawings | 1-7 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 September 2024** | **17 September 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**

International application No.
**PCT/JP2024/025641**

**C. DOCUMENTS CONSIDERED TO BE RELEVANT**

| Category* | Citation of document, with indication, where appropriate, of the relevant passages | Relevant to claim No. |
|---|---|---|
| P, A | WO 2023/145497 A1 (MITSUI MINING & SMELTING CO., LTD.) 03 August 2023 (2023-08-03) entire text, all drawings | 1-7 |
| P, A | WO 2024/024637 A1 (MITSUI MINING & SMELTING CO., LTD.) 01 February 2024 (2024-02-01) entire text, all drawings | 1-7 |

Form PCT/ISA/210 (second sheet) (July 2022)

**INTERNATIONAL SEARCH REPORT**
**Information on patent family members**

International application No.
**PCT/JP2024/025641**

| Patent document cited in search report | Publication date (day/month/year) | Patent family member(s) | Publication date (day/month/year) |
|---|---|---|---|
| JP 2012-047763 A | 08 March 2012 | (Family: none) | |
| WO 2022/030455 A1 | 10 February 2022 | US 2023/0307549 A1<br>paragraphs [0002]-[0024]<br>KR 10-2023-0017294 A<br>CN 116194612 A | |
| JP 2013-092479 A | 16 May 2013 | (Family: none) | |
| JP 6-273376 A | 30 September 1994 | (Family: none) | |
| JP 2007-108160 A | 26 April 2007 | US 2007/0059741 A1<br>entire text, all drawings<br>US 2011/0059520 A1 | |
| WO 2023/145497 A1 | 03 August 2023 | CN 118056282 A | |
| WO 2024/024637 A1 | 01 February 2024 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011043420 A
- JP 2012122749 A